(19) Europäisches Patentamt / European Patent Office / Office européen des brevets

(11) **EP 4 112 569 A1**

(12) **EUROPEAN PATENT APPLICATION**
published in accordance with Art. 153(4) EPC

(43) Date of publication:
**04.01.2023  Bulletin 2023/01**

(21) Application number: **21759571.9**

(22) Date of filing: **19.02.2021**

(51) International Patent Classification (IPC):
*C03B 20/00* (2006.01)    *C03C 3/062* (2006.01)

(52) Cooperative Patent Classification (CPC):
**C03B 20/00; C03C 3/062**

(86) International application number:
**PCT/JP2021/006492**

(87) International publication number:
**WO 2021/172232 (02.09.2021 Gazette 2021/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.02.2020  JP 2020034258**

(71) Applicant: **AGC INC.**
**Chiyoda-ku,
Tokyo 1008405 (JP)**

(72) Inventor: **SASAKI Kazuya**
**Koriyama-shi, Fukushima 963-0215 (JP)**

(74) Representative: **Müller-Boré & Partner
Patentanwälte PartG mbB
Friedenheimer Brücke 21
80639 München (DE)**

(54) **SILICA GLASS, HIGH FREQUENCY DEVICE USING SILICA GLASS, AND SILICA GLASS PRODUCTION METHOD**

(57)    The present invention pertains to silica glass having a bubble number of $1\times10^7$ to $1 \times 10^{15}$ /cm3, and having a density of 0.5-1.95 g/cm$^3$. The present invention also pertains to a silica glass production method including: a step for obtaining a silica glass porous body by depositing $SiO_2$ fine particles having been generated by flame-hydrolyzing a silicon compound; a step for obtaining a silica glass dense body by heating and sintering the silica glass porous body in an inert gas atmosphere; and a step for performing foam treatment by heating the silica glass dense body under a reduced pressure condition.

## FIG. 1

EP 4 112 569 A1

**Description**

TECHNICAL FIELD

The present invention relates to a silica glass, a high-frequency device using a silica glass, and a method for producing a silica glass.

BACKGROUND ART

Commonly, high-frequency devices such as an antenna, a filter, a demultiplexer, a diplexer, a capacitor, and an inductor have been used as passive electronic devices in a high-frequency band such as a microwave or a millimeter wave. These high-frequency devices generally include a dielectric substrate such as a resin substrate, a ceramic substrate, and a glass substrate.

Recently, in order to increase the communication capacity and the communication speed, the signal frequency has been further increased. It is known that, in a high-frequency device, as the signal frequency increases, a transmission loss of a dielectric substrate increases and a signal deteriorates. In order to prevent this, it is desirable to reduce relative permittivity or dielectric loss tangent of the dielectric substrate.

On the other hand, it is known that as the relative permittivity decreases, the size of the dielectric substrate is required to be increased. Therefore, it is desirable that the dielectric substrate has a small dielectric loss tangent and can reduce the relative permittivity depending on the purpose.

Patent Literature 1 discloses an antenna device including a dielectric substrate. The dielectric substrate preferably has a low dielectric loss tangent, and a silica glass is used as a material of the dielectric substrate.

It is known that the density and the relative permittivity of a silica glass are substantially proportional to each other. When the density decreases, the relative permittivity decreases. Examples of a method of controlling the density of the silica glass include a method of utilizing bubbles in the glass. For example, Patent Literature 2 discloses a production method, which is generally called a vapor-phase axial deposition (VAD) method, including a step of depositing a silica glass fine particles (soot) to obtain a silica glass porous body, and a step of heating and sintering the silica glass porous body. The conditions such as pressure, temperature, and treatment time during the heating and sintering are optimally combined to control the diameter and the number of bubbles remaining after the sintering, whereby the density of the obtained silica glass can be controlled.

CITATION LIST

PATENT LITERATURE

Patent Literature 1: JP-A-2017-228846
Patent Literature 2: WO 2008/069194

SUMMARY OF INVENTION

TECHNICAL PROBLEM

However, the production method described in Patent Literature 2 has a limit in a range of a controllable density. Specifically, only a silica glass having a density of 2.0 g/cm$^3$ or 2.16 g/cm$^3$ was obtained. A silica glass having a density of smaller than 2.0 g/cm$^3$ is hardly obtained, and therefore, a silica glass having a relative permittivity depending on the purpose cannot be obtained.

An aspect of the present invention provides a technique for obtaining a silica glass having a desired density.

SOLUTION TO PROBLEM

A silica glass according to an aspect of the present invention includes bubbles in the number of $1 \times 10^7$ /cm$^3$ to $1 \times 10^{15}$ /cm$^3$ and has a density of 0.5 g/cm$^3$ to 1.95 g/cm$^3$.

A method for producing a silica glass according to an aspect of the present invention includes: a step of depositing SiO$_2$ fine particles generated by flame hydrolysis of a silicon compound, to obtain a silica glass porous body; a step of heating and sintering the silica glass porous body in an inert gas atmosphere, to obtain a silica glass dense body; and a step of performing a foaming treatment to heat the silica glass dense body under a reduced pressure condition.

ADVANTAGEOUS EFFECTS OF INVENTION

According to the present invention, a silica glass having a desired relative permittivity can be obtained by controlling a density by means of controlling the number and diameter of bubbles contained in the silica glass.

BRIEF DESCRIPTION OF DRAWINGS

[FIG. 1] FIG. 1 is a cross-sectional view illustrating a silica glass according to an embodiment.
[FIG. 2] FIG. 2 is a cross-sectional view illustrating a part of a silica glass porous body formed when the silica glass according to the embodiment is produced.
[FIG. 3] FIG. 3 is a cross-sectional view illustrating a silica glass dense body formed when the silica glass according to the embodiment is produced.
[FIG. 4] FIG. 4 is an optical microscope image of a silica glass in Example 1.
[FIG. 5] FIG. 5 is an optical microscope image of a silica glass in Example 4.
[FIG. 6] FIG. 6 is a diagram showing a relationship between the number of bubbles contained in each of silica glasses according to Examples 1 to 10 and an average major axis diameter of an opening.
[FIG. 7] FIG. 7 is a diagram showing a relationship between a dehydration treatment time in production in each of silica glasses according to Examples 1 to 12 and an OH group concentration of the obtained silica glasses.
[FIG. 8] FIG. 8 is a graph showing frequency dependence of a relative permittivity in each of silica glasses according to Examples 1, 3, 11, and 13.
[FIG. 9] FIG. 9 is a diagram showing a relationship between a density and a relative permittivity in each of silica glasses according to Examples 1 to 13.
[FIG. 10] FIG. 10 is a graph showing frequency dependence of dielectric loss tangents in each of the silica glasses according to Examples 1, 3, 11, and 13.
[FIG. 11] FIG. 11 is a diagram showing a relationship between an OH group concentration and a dielectric loss tangent in each of the silica glasses according to Examples 1 to 12.
[FIG. 12] FIG. 12 is a diagram showing a relationship between an average major axis diameter and a root-mean-square height of an opening in each of the silica glasses according to Examples 1 to 10.
[FIG. 13] FIG. 13 is a diagram showing a mass percent concentration of a gas contained in bubbles of the silica glass in Example 1.

DESCRIPTION OF EMBODIMENTS

Hereinafter, embodiments of the present invention will be described in detail with reference to the drawings. In the specification, the expression "to" indicating a numerical range means that numerical values described before and after "to" are included as a lower limit value and an upper limit value, respectively. The lower limit value and the upper limit value include a range of rounding off.

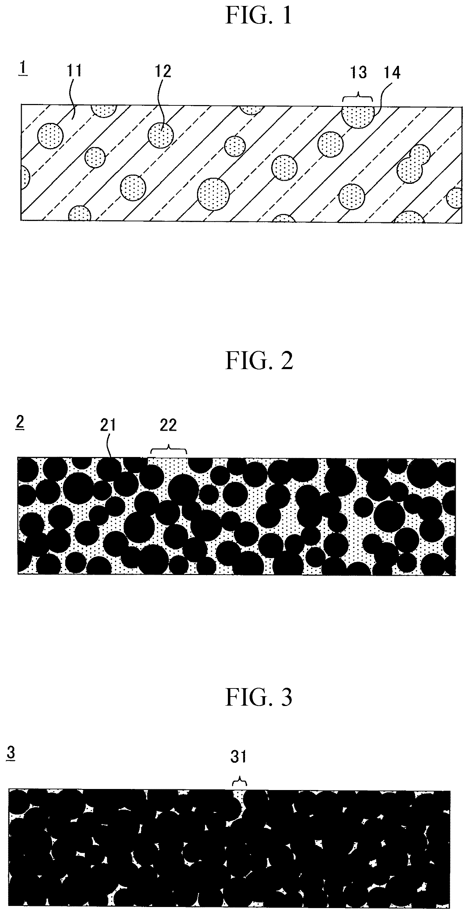

As illustrated in FIG. 1, a silica glass 1 according to an embodiment of the present invention contains a silica glass portion 11, bubbles 12 uniformly dispersed in the silica glass portion 11, and a concave portion 14 having an opening 13 on a surface of the silica glass 1.

A lower limit value of the density of the silica glass 1 is 0.5 g/cm$^3$, preferably 0.7 g/cm$^3$, and more preferably 1.0 g/cm$^3$. In the case where the density is 0.5 g/cm$^3$ or more, the strength of the silica glass 1 is sufficiently obtained. On the other hand, an upper limit value of the density is 1.95 g/cm$^3$, preferably 1.8 g/cm$^3$, more preferably 1.65 g/cm$^3$, and still more preferably 1.6 g/cm$^3$. In the case where the density is 1.95 g/cm$^3$ or less, the relative permittivity does not become too high, and the silica glass 1 is suitable as a dielectric substrate used for a high-frequency device.

The silica glass portion 11 is transparent and has a density of about 2.2 g/cm$^3$.

A lower limit value of the number of bubbles 12 (the number of bubbles) is $1 \times 10^7$ /cm$^3$, and preferably $3 \times 10^7$ /cm$^3$. On the other hand, an upper limit value of the number of bubbles is $1 \times 10^{15}$ /cm$^3$, preferably $1 \times 10^{14}$ /cm$^3$, and more preferably $1 \times 10^{13}$ /cm$^3$. A preferable range of the number of the bubbles 12 is related to the size of the opening 13 to be described later, and in the case where the number of bubbles is $1 \times 10^7$ /cm$^3$ or more, the density of the silica glass 1 does not become too high and falls in an appropriate range even without increasing a diameter of the opening 13. For example, when the silica glass 1 is processed for a high-frequency device application and a metal wiring layer is formed on a surface of an obtained substrate, if the diameter of the opening 13 is larger than a wiring width, the metal wiring layer cannot be formed as designed, which may cause an operation failure of the device. However, the above risk does not occur in the case where the number of bubbles is $1 \times 10^7$ /cm$^3$ or more. On the other hand, in the case where the number of bubbles is $1 \times 10^{15}$ /cm$^3$ or less, there is no risk that the bubbles are too small and disappear.

The gas contained in the bubbles 12 contains He, Ne, Ar, Kr, Xe, $N_2$ or a mixed gas thereof in an amount of 90 mass% or more.

The opening 13 has a substantially elliptical shape. The size of the diameter of the opening 13 is related to the number of bubbles. When the diameter of the opening 13 is large, the number of bubbles cannot be increased, and when the diameter of the opening 13 is small, the number of bubbles can be increased. As described above, too large diameter of the opening 13 is disadvantageous in the formation of a metal wiring layer, for example. In recent years, a wiring width of the metal wiring layer for a high-frequency device has been miniaturized, and it is desirable that the width is preferably at least 30 $\mu$m or less, more preferably 10 $\mu$m or less, still more preferably 5 $\mu$m or less, and particularly preferably 1 $\mu$m or less. Therefore, an average value of the major axis diameter of the openings is preferably 30 $\mu$m or less, more preferably 10 $\mu$m or less, still more preferably 5 $\mu$m or less, and particularly preferably 1 $\mu$m or less.

The silica glass 1 has a content of OH group being preferably 100 ppm or less, and more preferably 50 ppm or less. As the content of the OH group is decreased, a dielectric loss tangent is reduced (Reference Literature: JP-A-H07-330357). In the specification, ppm represents mass parts per million, and ppb represents mass parts per billion.

The silica glass 1 has a content of each of metal impurities including Li, Na, Mg, Al, K, Ca, Cr, Mn, Fe, Ni, Cu, Ti, Co, and Zn being 0.5 ppm by mass or less.

As the content of the metal impurities is reduced, the metal contamination can be prevented and the yield is increased in a process of processing the silica glass 1 for a high-frequency device application.

The silica glass 1 has a relative permittivity in a frequency range of 20 GHz to 110 GHz being preferably 1.3 to 3.5, and more preferably 1.5 to 3.5. The relative permittivity within this range can ensure a wide operating bandwidth while sufficiently reducing the size of the device, in the case where the silica glass 1 is used for a filter for a high-frequency device.

The silica glass 1 having the above-mentioned relative permittivity may also be preferably used as a member used for a plasma etching apparatus for producing a semiconductor. For example, in the case where the silica glass 1 is used as a member used in a plasma processing chamber, electrical distortion is reduced due to low relative permittivity. Therefore, generation of unnecessary plasma can be reduced to a minimum. At this time, the temperature during use is assumed to be 50°C to 200°C, the pressure is assumed to be 150 Pa or less, and the relative permittivity is preferably 1.3 to 3.5 in a frequency range of 100 kHz to 200 MHz.

The silica glass 1 has a dielectric loss tangent in a frequency range of 20 GHz to 110 GHz being preferably $1.0 \times 10^{-5}$ to $5.0 \times 10^{-4}$. In the case where the dielectric loss tangent is sufficiently small as described above, deterioration of a signal due to a transmission loss can be prevented, for example, in the case where the silica glass 1 is used as a dielectric substrate for a high-frequency device.

The silica glass 1 after being optically polished has a root-mean-square height of a glass surface being preferably 1 $\mu$m or less. In the case where the root-mean-square height is sufficiently small as described above, an increase in a transmission loss caused by a skin current can be prevented, for example, in the case where a conductor layer is formed on a surface of the optically polished silica glass 1 for a high-frequency device application. In order to further reduce the transmission loss, the surface of the optically polished silica glass 1 may be subjected to a smoothing treatment by a method such as fire polishing or $CO_2$ laser. In the specification, the optical polishing means polishing performed by using a slurry containing an abrasive. As the abrasive, cerium oxide particles, silicon oxide particles, aluminum oxide particles, zirconium oxide particles, titanium oxide particles, diamond particles, silicon carbide particles, and the like can be used.

Next, a method for producing a silica glass according to an embodiment of the present invention will be described. A VAD method is used as the method for synthesizing the silica glass in the present invention, but the production method may be appropriately changed as long as the effect of the present invention is exhibited.

(1) Selection of Synthetic Raw Material

The synthetic raw material of the silica glass is not particularly limited as long as it is a raw material that can be gasified, and typical examples thereof include silicon halide compounds, for example, silicon chlorides such as $SiCl_4$, $SiHCl_3$, $SiH_2Cl_2$, and $SiCH_3Cl_3$, and silicon fluorides such as $SiF_4$, $SiHF_3$, and $SiH_2F_2$, and silicon compounds not containing a halogen, such as alkoxysilanes represented by $R_nSi(OR)_{4-n}$ (where R represents an alkyl group having 1 to 4 carbon atoms, and n represents an integer of 0 to 3) and $(CH_3)_3Si\text{-}O\text{-}Si(CH_3)_3$.

(2) Formation of Silica Glass Porous Body

The synthetic raw material is subjected to flame hydrolysis at a temperature of preferably 1,000°C to 1,500°C to synthesize $SiO_2$ fine particles, and the $SiO_2$ fine particles are deposited on a rotating substrate, thereby forming the silica glass porous body 2 as illustrated in FIG. 2. The silica glass porous body 2 is a porous body formed by fusing primary particles 21 of $SiO_2$ fine particles, and has a large number of pores 22 that lead to the outside.

**(3) Dehydration Treatment**

The silica glass porous body 2 is preferably heated at a high temperature in a vacuum atmosphere to perform a dehydration treatment. Although the dehydration treatment is not essential, it is preferable to perform the dehydration treatment because the OH group concentration of the silica glass 1 to be obtained later is reduced by this step and the dielectric loss tangent is reduced, as will be described later.

The heating temperature during the dehydration treatment is preferably 1,000°C to 1,300°C. In the case where the heating temperature is 1,000°C or higher, a dehydration reaction sufficiently proceeds, and in the case where the temperature is 1,300°C or lower, densification of the porous body may not proceed earlier than the progress of the dehydration reaction.

Regarding the dehydration treatment time, the silica glass porous body 2 may be maintained at the above-mentioned heating temperature for 240 hours or less. As the treatment time is increased, the OH group concentration is decreased. However, too long treatment time deteriorates the production efficiency.

**(4) Heating and Sintering**

When the dehydrated silica glass porous body 2 is pressurized, and heated and sintered at a high temperature in an inert gas atmosphere, a silica glass dense body in which the pores 22 leading to the outside are completely closed is obtained.

During the heating and sintering, the inert gas is dissolved in the silica glass. The inert gas is typically He, Ne, Ar, Kr, Xe, $N_2$ or a mixed gas thereof, and as will be described in detail later, Ar is preferable. It is known that the solubility of the inert gas in the silica glass tends to increase as a partial pressure of the inert gas in the atmosphere increases or as a temperature of the silica glass decreases.

The range of pressurization during the sintering is preferably 0.01 MPa to 200 MPa. In the case where the pressure is 0.01 MPa or more, the inert gas is sufficiently dissolved, and in the case where the pressure is 200 MPa or less, the inert gas may not be excessively dissolved. As will be described later, the dissolution amount of the inert gas affects the degree of foaming in the subsequent foaming treatment.

The heating temperature during the sintering is preferably 1,200°C to 1,700°C, and is preferably higher than the heating temperature during the dehydration treatment. In the case where the heating temperature is 1,200°C or higher, the sintering sufficiently proceeds, and in the case where the heating temperature is 1,700°C or lower, volatilization of a glass component may not occur.

Regarding the sintering time, the silica glass porous body 2 may be maintained at the pressure and the heating temperature described above for preferably 10 hours to 100 hours, and more preferably 20 hours to 60 hours. In the case where the treatment time is 10 hours or more, the sintering and the dissolution of the inert gas sufficiently proceed, and in the case where the treatment time is 100 hours or less, the production efficiency is good.

**(5) Foaming Treatment**

Subsequently, the silica glass dense body is heated at a high temperature while the pressure is reduced to a pressure of less than 0.01 Mpa, so that the inert gas dissolved in the silica glass foams, or bubbles in the silica glass dense body are thermally expanded, thereby obtaining the silica glass 1 having uniformly dispersed bubbles 12.

The mechanism of foaming will be described. As described above, it is known that the solubility of the inert gas in the silica glass tends to increase as the partial pressure of the inert gas in the atmosphere increases or as the temperature of the silica glass decreases. Therefore, when heating is performed under a condition of a lower pressure or a higher temperature in the foaming treatment than that during the heating and sintering, a difference between the dissolution amount during the heating and sintering and the dissolution amount during the foaming treatment contributes to a supersaturated state, and foaming of the inert gas occurs in the silica glass dense body.

Among the types of inert gases described above, Ar is preferable because Ar is relatively inexpensive and has high temperature dependence of solubility, and the degree of foaming is easily controlled.

The heating temperature during the foaming treatment is preferably 1,300°C to 1,800°C, and is preferably higher than the heating temperature during the heating and sintering. In the case where the heating temperature is 1,300°C or higher, sufficient foaming or thermal expansion can be obtained, and in the case where the heating temperature is 1,800°C or lower, there is no risk that the glass material bursts due to excessive foaming or thermal expansion.

Regarding the foaming treatment time, the silica glass dense body may be maintained at the pressure and the heating temperature described above for preferably 1 minute to 10 hours. In the case where the treatment time is 1 minute or more, sufficient foaming or thermal expansion is obtained, and in the case where the treatment time is 10 hours or less, there is no risk that the glass material bursts due to excessive foaming or thermal expansion.

By combining the pressures, the heating temperatures, and the treatment times during the heating and sintering and the foaming treatment to change the degree of foaming of the inert gas that foams in the supersaturated state and the degree of thermal expansion of the bubbles, the number and the diameter of the bubbles 12 contained in the silica glass 1 can be controlled, whereby the density can be controlled.

EXAMPLE

Next, experimental data will be described mainly with reference to Table 1, Table 2, and FIG. 3 to FIG. 13.
The physical property values of the silica glass 1, the transparent silica glass, and the silica glass dense body 3 according to each example were measured by the following method.
Examples 1 to 10 are Inventive Examples, and Examples 11 to 16 are Comparative Examples.

(Density)

The density of about 20 g of a glass sample was calculated by Archimedes method by using a molecular weight balance (trade name: AP224W) manufactured by Shimadzu Corporation.

(Average Major Axis Diameter of Opening)

A cut surface of the silica glass 1 was optically polished, and an optical microscope image (270 $\mu$m $\times$ 340 $\mu$m) of the cut surface was obtained. Then, a section of 125 $\mu$m $\times$ 160 $\mu$m at each of four corners of the optical microscope image was extracted, followed by determining an average value of the major axis diameter of openings 13 included in the respective sections, and an average value of the four average values was defined as an average major axis diameter of the opening. As for openings 13 on a frame line of the section, an opening whose major axis diameter could not be clearly measured was excluded, and as for an opening 13 formed by uniting a plurality of openings, a shape of each opening was estimated based on a contour line of the opening 13 formed by uniting the plurality of openings, and each major axis diameter was measured.

(Number of Bubbles)

The number of bubbles was calculated from the following formula (1) on the assumption that all of the bubbles 12 contained in the silica glass 1 were the same spherical shape and a diameter of the spherical shape was equal to the average major axis diameter of the opening described above.

$$\text{(Number of Bubbles)} = \frac{2.2-\rho}{2.2} \times \frac{1}{\frac{4}{3}\pi\left(\frac{d}{2}\right)^3} \qquad (1)$$

In the above formula (1), $\rho$ represents the density (unit: g/cm$^3$) of the silica glass 1, d represents the average major axis diameter (unit: cm) of the opening, and the unit of the number of bubbles is /cm$^3$.

(Relative Permittivity and Dielectric Loss Tangent)

The relative permittivity and the dielectric loss tangent of a glass sample of 50 mm $\times$ 40 mm $\times$ 0.3 mm were measured by using a cavity resonator and a vector network analyzer in accordance with a method described in JIS-R1641 (2007).

(Root-Mean-Square Height)

The root-mean-square height was measured in accordance with a method described in JIS-B0601 (2013) by optically polishing a cut surface of a glass sample having an appropriate size.

(Composition of Gas Included in Bubbles)

The composition of the gas contained in the bubbles 12 was measured by using a mass spectrometer after an appropriate glass sample was pulverized in a vacuum chamber to collect the gas in the bubbles 12.

(Content of Metal Impurities)

The content of the metal impurities of a glass sample having an appropriate size was measured by an inductively coupled plasma-mass spectrometer (ICP-MS) method.

(OH Group Concentration)

The OH group concentration of a glass sample having an appropriate thickness was calculated by acquiring an IR spectrum by using an infrared spectrophotometer and quantifying an absorption peak caused by the OH group (Reference Literature: J. P. Williams; Y. S. Su; W. R. Strzegowski; B. L. Butler; H. L. Hoover; V. O. Altemose, Direct determination of water in glass, Ceramic. Bulletin., Vol. 55, No. 5, pp524, 1976).
The silica glass 1, the transparent silica glass, and the silica glass dense body 3 according to each Example were produced by the following method.

(Examples 1 to 10)

$SiO_2$ fine particles synthesized by flame hydrolysis of SiCl4 were deposited on a rotating substrate to obtain a silica glass porous body 2. The silica glass porous body 2 was placed in a heating furnace, and after vacuum exhaust, a temperature was raised to 1,250°C, and treatment time was appropriately adjusted to perform a dehydration treatment so that the OH group concentration of the finally obtained silica glass 1 reached the value shown in Table 1. Subsequently, the heating furnace was filled with an Ar gas and pressurized, and then the temperature was raised to a predetermined temperature to perform heating and sintering. The pressure returned to atmospheric pressure, followed by naturally cooling to reach the room temperature. A silica glass dense body obtained at this time was opaque silica glass containing a small number of bubbles. Subsequently, after vacuum exhaust, the temperature was raised to a predetermined temperature, and a foaming treatment was performed. The pressure returned to atmospheric pressure, followed by naturally cooling to reach the room temperature, and then, the treated product was taken out. The obtained silica glass 1 contained bubbles 12 that were uniformly dispersed. The pressure, the heating temperature, and the treatment time during the heating and sintering, and the heating temperature and the treatment time during the foaming treatment were combined so that the density, the number of bubbles, and the average major axis diameter of the opening shown in Table 1 were satisfied.

(Examples 11 and 12)

$SiO_2$ fine particles synthesized by flame hydrolysis of SiCl4 were deposited on a rotating substrate to obtain a silica glass porous body 2. The silica glass porous body 2 was placed in a heating furnace and was heated to 1,250°C after vacuum exhaust, and treatment time was appropriately adjusted to perform a dehydration treatment so that the OH group concentration shown in Table 1 was satisfied. Subsequently, the dehydrated silica glass porous body was heated to 1,350°C and was held for 24 hours to perform heating and sintering. The pressure returned to atmospheric pressure, followed by naturally cooling to reach the room temperature, and then, the treated product was taken out. The obtained silica glass dense body was transparent silica glass that does not contain bubbles substantially.

(Example 13)

The silica glass is a transparent silica glass produced by a direct method.

(Example 14)

$SiO_2$ fine particles synthesized by flame hydrolysis of $SiCl_4$ were deposited on a rotating substrate to obtain a silica glass porous body 2. The silica glass porous body 2 was placed in a heating furnace, and was heated to 1,350°C and held for 2 hours after vacuum exhaust, thereby performing heating and sintering. The pressure returned to atmospheric pressure, followed by naturally cooling to reach the room temperature, and then, the treated product was taken out. At this time, the treatment time was not sufficient, and thus, the pores 22 leading to the outside were not completely closed, and a silica glass dense body 3 having pores 31 leading to the outside as illustrated in FIG. 3 was obtained.

(Example 15)

A silica glass dense body 3 was produced in the same manner as in Example 14, except that the temperature was raised to 1,320°C during the dehydration treatment.

(Example 16)

A silica glass dense body 3 was produced in the same manner as in Example 15, except for holding for 5 hours after the temperature was raised during the dehydration treatment.

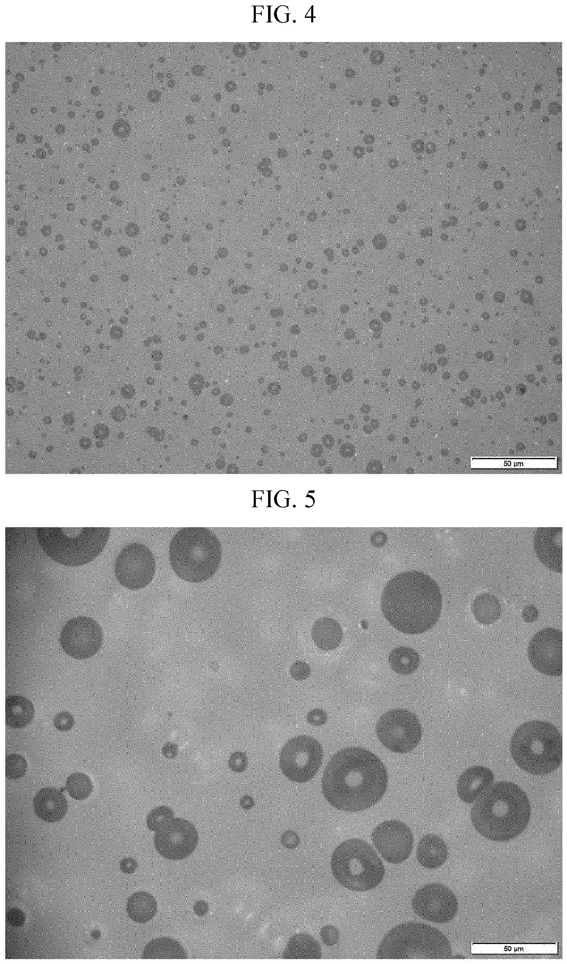

FIG. 4 shows an optical microscope image obtained by optically polishing a cut surface of the silica glass 1 according to Example 1 and capturing an image thereof. As a result of the measurement, the average major axis diameter of the openings was 4.1 $\mu$m, and the number of bubbles was $3.15 \times 10^9$ /cm$^3$. It can be seen that the bubbles 12 having a small diameter are uniformly dispersed in the silica glass 1.

FIG. 5 shows an optical microscope image obtained by optically polishing a cut surface of the silica glass 1 according to Example 4 and capturing an image thereof. As a result of the measurement, the average major axis diameter of the openings was 21.1 $\mu$m, and the number of bubbles was $3.70 \times 10^7$ /cm$^3$. As compared with Example 1, the diameter of the bubbles 12 is larger and the diameter varies, but it can be seen that the bubbles 12 are uniformly dispersed as a whole. It is considered that the reason why the diameter varies is that the bubbles 12 easily coalesce with each other during the foaming treatment because the diameter is relatively large.

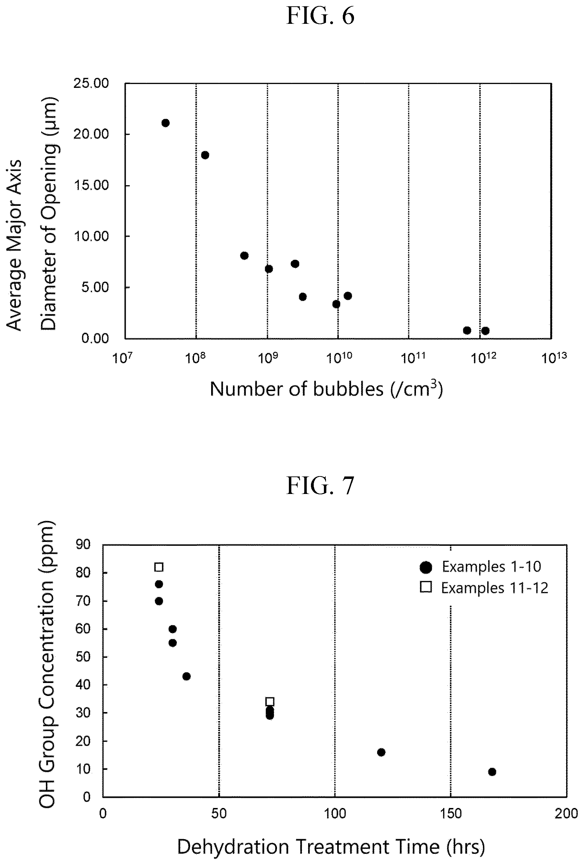

FIG. 6 shows a relationship between the number of bubbles contained in the silica glass 1 according to Examples 1 to 10 and the average major axis diameter of the opening. As is clear from FIG. 6, it can be seen that as the number of bubbles is increased, the average major axis diameter of the opening is reduced.

FIG. 7 shows a relationship between the dehydration treatment time and the OH group concentration of the silica glass 1 and the transparent silica glass according to Examples 1 to 12. As is clear from FIG. 7, it can be seen that as the treatment time is longer, the OH group concentration decreases and gradually and asymptotically approaches 0 ppm.

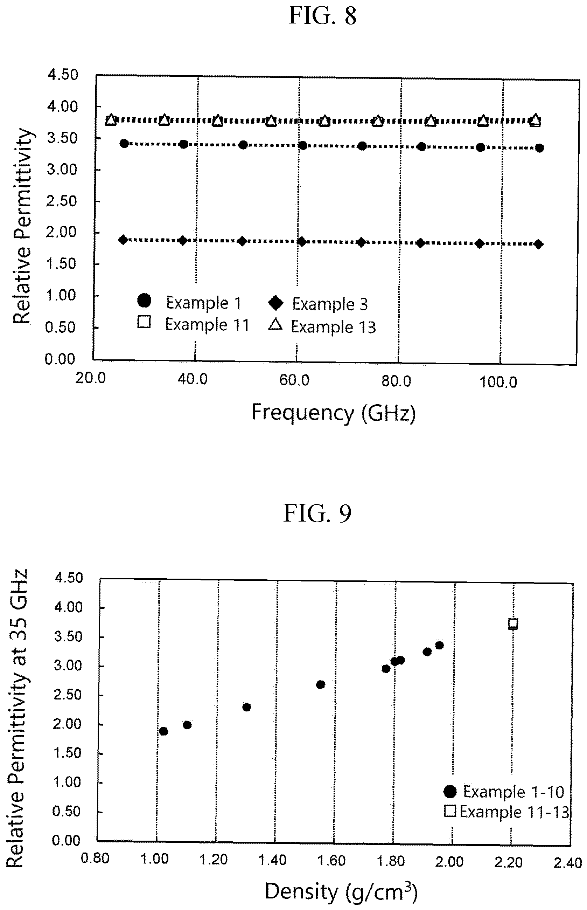

FIG. 8 shows frequency dependence of the relative permittivity of the silica glass 1 and the transparent silica glass according to Examples 1, 3, 11, and 13. As is clear from FIG. 8, it can be seen that the relative permittivity exhibits a substantially constant value in the frequency range of 20 GHz to 110 GHz.

FIG. 9 shows a relationship between the density and the relative permittivity of the silica glass 1 and the transparent silica glass according to Examples of Table 1. As is clear from FIG. 9, it can be seen that the density and the relative permittivity of the silica glass 1 according to Examples 1 to 10 have a substantially proportional relationship. On the other hand, since the transparent silica glass according to Examples 1 to 13 did not substantially contain bubbles, the density was constant at 2.2 g/cm$^3$, and the relative permittivity was also a substantially constant value. Therefore, it can be seen that the silica glass 1 having a desired relative permittivity can be obtained by controlling the density by the production method of the silica glass 1 according to the present invention.

The relative permittivity is a value at a frequency of 35 GHz as a representative in FIG. 9, and it is obvious from FIG. 8 that the above-described substantially proportional relationship can be obtained at any frequency in the range of 20 GHz to 110 GHz.

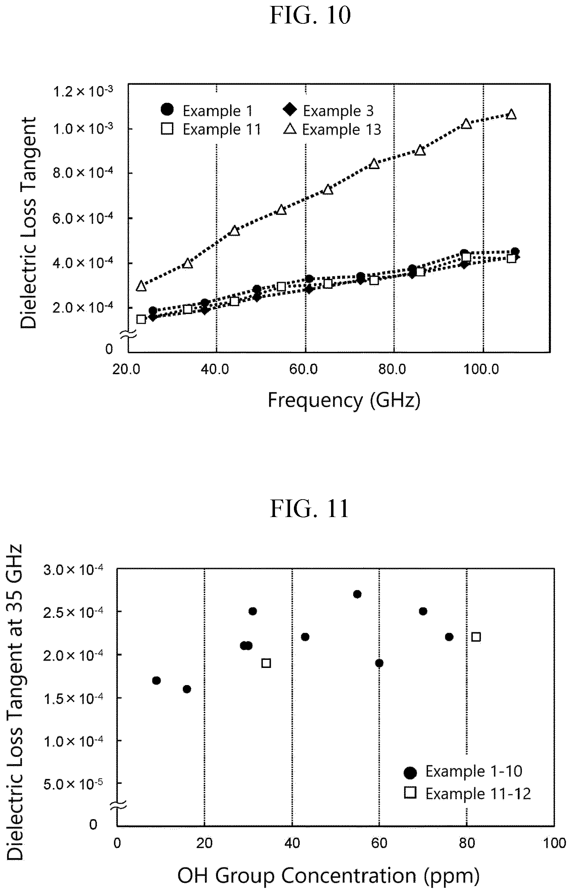

FIG. 10 shows frequency dependence of the dielectric loss tangent of the silica glass 1 and the transparent silica glass according to Examples 1, 3, 11, and 13. As is clear from FIG. 10, the dielectric loss tangent increases as the frequency increases. In addition, in the silica glass according to Example 13 in which the OH group concentration is relatively high, an increase rate of the dielectric loss tangent with the increase of the frequency is apparently larger than those of the other Examples. Therefore, the reduction in the OH group concentration by the dehydration treatment is also advantageous in that the low dielectric loss tangent can be maintained in a wide frequency range.

FIG. 11 shows a relationship between the OH group concentration and the dielectric loss tangent of the silica glass 1 and the transparent silica glass according to Examples 1 to 12. It was found from FIG. 11 that the dielectric loss tangent tended to increase as the OH group concentration increased.

The dielectric loss tangent is a value at a frequency of 35 GHz as a representative in FIG. 11, and it is obvious from FIG. 10 that a similar tendency is obtained at any frequency in the range of 20 GHz to 110 GHz.

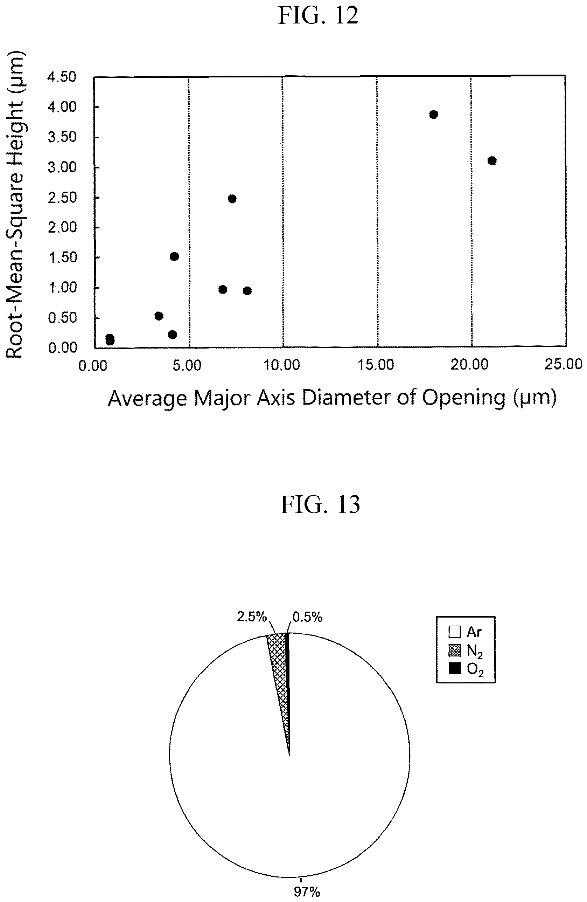

FIG. 12 shows a relationship between the average major axis diameter of the opening and the root-mean-square height of the silica glass 1 according to Examples 1 to 10. It was found from FIG. 12 that the root-mean-square height also tended to increase as the major axis diameter of the opening increased. This is because, as the average major axis diameter of the opening is increased, the unevenness of the glass surface is more significant.

FIG. 13 shows mass percent concentrations of a gas contained in bubbles in the silica glass 1 according to Example 1. From FIG. 13, 99.5 mass% of the gas contained in the bubbles was a mixed gas of Ar and $N_2$.

Table 2 shows contents of metal impurities in the silica glass 1 and the transparent silica glass according to Examples 1 and 11, respectively. As is clear from Table 2, the contents of the metal impurities are in the order of ppb, which are extremely small.

As a result of measuring dielectric loss tangents at a frequency of 35 GHz of the silica glass dense bodies 3 according to Examples 14 to 16, the dielectric loss tangents were $1.1 \times 10^{-3}$, $2.5 \times 10^{-3}$, and $1.9 \times 10^{-3}$, respectively. As is clear from comparison with Table 1, the dielectric loss tangent of the silica glass dense body 3 was significantly larger than the dielectric loss tangent of the silica glass 1. This is because the pores 31 leading to the outside easily adsorb water in the atmosphere, and the OH group concentration increases. Therefore, for example, in the case where the silica glass dense body 3 is used as a dielectric substrate for a high-frequency device, it is expected that a signal is deteriorated due to a large transmission loss.

The silica glass, the high-frequency device using the silica glass, and the production method of the silica glass according to the present invention have been described above, but the present invention is not limited to the above-described embodiment and the like. Various changes, modifications, substitutions, additions, deletions, and combinations are allowed within the scope described in the claims. They naturally belong to the technical scope of the present invention.

Table 1

| Examples | Forms of glass | Density [g/cm$^3$] | Number of bubbles [/cm$^3$] | Average major axis diameter of opening [$\mu$m] | OH group concentration [ppm] | Relative permittivity @35 GHz | Dielectric loss tangent @35 GHz | Root-mean-square height [$\mu$m] |
|---|---|---|---|---|---|---|---|---|
| Example 1 | Silica glass 1 | 1.95 | $3.15 \times 10^9$ | 4.10 | 76 | 3.42 | $2.2 \times 10^{-4}$ | 0.22 |
| Example 2 | Silica glass 1 | 1.77 | $9.50 \times 10^9$ | 3.40 | 16 | 3.00 | $1.6 \times 10^{-4}$ | 0.53 |
| Example 3 | Silica glass 1 | 1.02 | $1.38 \times 10^{10}$ | 4.20 | 30 | 1.89 | $2.1 \times 10^{-4}$ | 1.51 |
| Example 4 | Silica glass 1 | 1.80 | $3.70 \times 10^7$ | 21.10 | 29 | 3.13 | $2.1 \times 10^{-4}$ | 3.09 |
| Example 5 | Silica glass 1 | 1.30 | $1.34 \times 10^8$ | 18.00 | 31 | 2.32 | $2.5 \times 10^{-4}$ | 3.86 |
| Example 6 | Silica glass 1 | 1.91 | $4.74 \times 10^8$ | 8.10 | 9 | 3.30 | $1.7 \times 10^{-4}$ | 0.94 |
| Example 7 | Silica glass 1 | 1.82 | $1.05 \times 10^9$ | 6.80 | 70 | 3.16 | $2.5 \times 10^{-4}$ | 0.96 |
| Example 8 | Silica glass 1 | 1.10 | $2.45 \times 10^9$ | 7.30 | 43 | 2.00 | $2.2 \times 10^{-4}$ | 2.47 |
| Example 9 | Silica glass 1 | 1.80 | $6.53 \times 10^{11}$ | 0.81 | 55 | 3.13 | $2.7 \times 10^{-4}$ | 0.12 |
| Example 10 | Silica glass 1 | 1.55 | $1.19 \times 10^{12}$ | 0.78 | 60 | 2.72 | $1.9 \times 10^{-4}$ | 0.17 |
| Example 11 | Transparent silica glass | 2.20 | - | - | 34 | 3.78 | $1.9 \times 10^{-4}$ | 0.02 |
| Example 12 | Transparent silica glass | 2.20 | - | - | 82 | 3.79 | $2.2 \times 10^{-4}$ | 0.01 |
| Example 13 | Transparent silica glass | 2.20 | - | - | 1122 | 3.81 | $4.0 \times 10^{-4}$ | 0.01 |

Table 2

| Examples | Li | Na | Mg | Al | K | Ca | Cr | Mn | Fe | Ni | Cu | Ti | Co | Zn |
|---|---|---|---|---|---|---|---|---|---|---|---|---|---|---|
| Example 1 [ppb] | < 0.3 | 3.1 | < 0.3 | < 0.3 | 0.7 | < 0.3 | < 0.3 | < 0.3 | < 0.3 | 0.3 | < 0.3 | 5.4 | < 0.3 | < 0.6 |
| Example 11 [ppb] | < 0.3 | 2.4 | 0.3 | < 0.3 | < 0.3 | < 0.3 | < 0.3 | < 0.3 | < 0.3 | 0.3 | < 0.3 | 6.1 | < 0.3 | < 0.6 |

Although the present invention has been described in detail with reference to specific embodiments, it will be apparent to those skilled in the art that various changes and modifications can be made without departing from the spirit and scope of the present invention. The present application is based on a Japanese Patent Application No. 2020-034258 filed on February 28, 2020, contents of which are incorporated herein by reference.

REFERENCE SIGNS LIST

1     Silica glass
11    Silica glass portion
12    Bubble
13    Opening
14    Concave portion
2     Silica glass porous body
21    Primary particle of $SiO_2$ fine particle
22    Pore leading to outside
3     Silica glass dense body
31    Pore leading to outside

**Claims**

1. A silica glass, comprising bubbles in the number of $1 \times 10^7$ /cm$^3$ to $1 \times 10^{15}$ /cm$^3$ and having a density of 0.5 g/cm$^3$ to 1.95 g/cm$^3$.

2. The silica glass according to Claim 1, wherein the density is 0.7 g/cm$^3$ to 1.8 g/cm$^3$.

3. The silica glass according to Claim 1 or 2, comprising the bubbles in the number of $1 \times 10^7$ /cm$^3$ to $1 \times 10^{13}$ /cm$^3$.

4. The silica glass according to any one of Claims 1 to 3, wherein the bubbles comprises He, Ne, Ar, Kr, Xe, $N_2$ or a mixed gas thereof in an amount of 90 mass% or more.

5. The silica glass according to any one of Claims 1 to 4, comprising openings formed on a glass surface, having an average value of a major axis diameter of 30 μm or less.

6. The silica glass according to any one of Claims 1 to 5, comprising openings formed on a glass surface, having an average value of a major axis diameter of 10 μm or less.

7. The silica glass according to any one of Claims 1 to 6, having a content of OH group being 100 ppm or less.

8. The silica glass according to any one of Claims 1 to 7, having a content of each of metal impurities of Li, Na, Mg, Al, K, Ca, Cr, Mn, Fe, Ni, Cu, Ti, Co, and Zn being 0.5 ppm by mass or less.

9. The silica glass according to any one of Claims 1 to 8, having a relative permittivity in a frequency range of 20 GHz to 110 GHz being 1.3 to 3.5.

10. The silica glass according to any one of Claims 1 to 8, having a relative permittivity in a frequency range of 20 GHz to 110 GHz being 1.5 to 3.5.

11. The silica glass according to any one of Claims 1 to 10, having a dielectric loss tangent in a frequency range of 20 GHz to 110 GHz being $1.0 \times 10^{-5}$ to $5.0 \times 10^{-4}$.

12. The silica glass according to any one of Claims 1 to 11, having a root-mean-square height of a glass surface being 1 $\mu$m or less.

13. A high-frequency device using the silica glass as described in any one of Claims 1 to 12.

14. A method for producing a silica glass, comprising:

a step of depositing $SiO_2$ fine particles generated by flame hydrolysis of a silicon compound, to obtain a silica glass porous body;
a step of heating and sintering the silica glass porous body in an inert gas atmosphere, to obtain a silica glass dense body; and
a step of performing a foaming treatment to heat the silica glass dense body under a reduced pressure condition.

FIG. 1

FIG. 2

FIG. 3

FIG. 4

FIG. 5

FIG. 6

FIG. 7

FIG. 8

FIG. 9

FIG. 10

FIG. 11

## FIG. 12

## FIG. 13

<div align="center">

**INTERNATIONAL SEARCH REPORT**

</div>

| | International application No. |
|---|---|
| | PCT/JP2021/006492 |

**A. CLASSIFICATION OF SUBJECT MATTER**
C03B 20/00(2006.01)i; C03C 3/062(2006.01)i
FI: C03B20/00 C; C03B20/00 E; C03B20/00 J; C03C3/062

According to International Patent Classification (IPC) or to both national classification and IPC

**B. FIELDS SEARCHED**

Minimum documentation searched (classification system followed by classification symbols)
C03B20/00; C03C3/062

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 10-203839 A (TOSOH CORP.) 04 August 1998 (1998-08-04) table 1, examples 1-2, 4, 6, claims, paragraphs [0005], [0008]-[0009], [0011]-[0012] | 1-12<br>13<br>14 |
| Y<br>A | WO 2019/093182 A1 (AGC INC.) 16 May 2019 (2019-05-16) claims | 13<br>14 |
| Y<br>A | JP 2017-228846 A (FUJIKURA LTD.) 28 December 2017 (2017-12-28) claims | 13<br>14 |
| X<br>A | JP 10-029836 A (SHIN-ETSU QUARTZ PRODUCTS CO., LTD.) 03 February 1998 (1998-02-03) claims, examples 1-4 | 14<br>1-13 |

☒ Further documents are listed in the continuation of Box C.        ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 April 2021 (14.04.2021) | 27 April 2021 (27.04.2021) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**INTERNATIONAL SEARCH REPORT**

| International application No. |
| --- |
| PCT/JP2021/006492 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | WO 2017/110799 A1 (ASAHI GLASS CO., LTD.) 29 June 2017 (2017-06-29) entire text, all drawings | 1-14 |
| A | JP 2017-210403 A (HERAEUS QUARZGLAS GMBH & CO. KG) 30 November 2017 (2017-11-30) entire text, all drawings | 1-14 |
| A | JP 9-030835 A (SHIN-ETSU QUARTZ PRODUCTS CO., LTD.) 04 February 1997 (1997-02-04) entire text, all drawings | 1-14 |

Form PCT/ISA/210 (continuation of second sheet) (January 2015)

**INTERNATIONAL SEARCH REPORT**
Information on patent family members

International application No.

PCT/JP2021/006492

| Patent Documents referred in the Report | Publication Date | Patent Family | Publication Date |
|---|---|---|---|
| JP 10-203839 A | 04 Aug. 1998 | (Family: none) | |
| WO 2019/093182 A1 | 16 May 2019 | CN 111263736 A claims | |
| JP 2017-228846 A | 28 Dec. 2017 | (Family: none) | |
| JP 10-029836 A | 03 Feb. 1998 | (Family: none) | |
| WO 2017/110799 A1 | 29 Jun. 2017 | (Family: none) | |
| JP 2017-210403 A | 30 Nov. 2017 | US 2017/0341968 A1 entire text, all drawings EP 3248950 A1 CN 107417071 A KR 10-2017-0132696 A | |
| JP 9-030835 A | 04 Feb. 1997 | (Family: none) | |

Form PCT/ISA/210 (patent family annex) (January 2015)

## REFERENCES CITED IN THE DESCRIPTION

**Patent documents cited in the description**

- JP 2017228846 A
- WO 2008069194 A
- JP H07330357 A
- JP 2020034258 A

**Non-patent literature cited in the description**

- **J. P. WILLIAMS ; Y. S. SU ; W. R. STRZEGOWSKI ; B. L. BUTLER ; H. L. HOOVER ; V. O. ALTEMOSE.** Direct determination of water in glass. *Ceramic. Bulletin,* 1976, vol. 55 (5), 524